# EUROPEAN PATENT APPLICATION

(11) **EP 4 848 698 A1**
(43) Date of publication of application: **02.12.2026**
(21) Application number: 25767127.1
(22) Date of filing: 06.02.2025
(51) Int. Cl.: H04L 67/51

(54) **DATA MANAGEMENT METHOD AND APPARATUS, SYSTEM, STORAGE MEDIUM, AND PROGRAM PRODUCT**

(30) Priority: 04.03.2024 CN 202410244557
(71) Applicant: Huawei Technologies Co., Ltd., Shenzhen, Guangdong 518129 (CN)
(72) Inventor: YE, Shuxin, Shenzhen, Guangdong 518129 (CN); LI, Yexing, Shenzhen, Guangdong 518129 (CN); YU, Yijun, Shenzhen, Guangdong 518129 (CN)
(74) Representative: Körber, Martin Hans
(86) International application number: PCT/CN2025/076075
(87) International publication number: WO 2025/185383

(57) **Abstract**

A data management method, apparatus, and system, a storage medium, and a program product are provided. The method includes: A first network management service consumer entity sends first information to a network management service provider entity, where the first information indicates that a first data set from the first network management service consumer entity is allowed to be shared; a second network management service consumer entity sends a first request to the network management service provider entity; and the network management service provider entity sends, to the second network management service consumer entity, a response to the first request based on the first request and at least part of data in the first data set. According to the solutions of this application, a network management service consumer entity that provides data indicates, to a network management service provider entity, that sharing of the data is allowed, so that when receiving a request from another network management service consumer entity, the network management service provider entity may use the data based on the indication to execute a requested twin service, thereby improving data security.

## Description

This application claims priority to Chinese Patent Application No. 202410244557.3, filed with the China National Intellectual Property Administration on March 4, 2024 and entitled "DATA MANAGEMENT METHOD, APPARATUS, AND SYSTEM, STORAGE MEDIUM, AND PROGRAM PRODUCT", which is incorporated herein by reference in its entirety.

### TECHNICAL FIELD

This application relates to the field of communication technologies, and in particular, to a data management method, apparatus, and system, a storage medium, and a program product.

### BACKGROUND

A network management service provider entity may execute twin services of a plurality of network management service consumer entities. Typically, when executing a twin service 1 of a network management service consumer entity A, the network management service provider entity uses some data from the network management service consumer entity A. Further, when receiving a request from a network management service consumer entity B, the network management service provider entity determines, based on data similarity, to continue using the data when executing a twin service 2. This mechanism cannot ensure data security, leading to exposure of privacy data.

In view of this, how to perform data management and improve data security during execution of twin services is an urgent problem to be resolved.

### SUMMARY

This application provides a data management method, apparatus, and system, a storage medium, and a program product, to perform data management and improve data security.

According to a first aspect, a data management method is provided. The method may be performed by a network management service provider entity, or may be performed by a chip or a circuit configured in the network management service provider entity, or may be performed by a logical module or software that can implement all or some functions of the network management service provider entity. This is not limited in this application.

The method includes: The network management service provider entity receives first information from a first network management service consumer entity, where the first information indicates that a first data set from the first network management service consumer entity is allowed to be shared; the network management service provider entity receives a first request from a second network management service consumer entity, where the first request is used to request a second twin service; and the network management service provider entity sends, to the second network management service consumer entity, a response to the first request based on the first request and at least part of data in the first data set, where the response includes an execution result of the second twin service.

In this aspect, the first network management service consumer entity that provides data indicates, to the network management service provider entity, that sharing of the data is allowed, so that when receiving a request from the second network management service consumer entity, the network management service provider entity may use the data based on the indication to execute the requested twin service, thereby improving data security.

With reference to the first aspect, in a possible implementation, the first request includes at least one of the following information: a twin object, a twin service type, or a service configuration.

With reference to the first aspect, in another possible implementation, the method further includes: The network management service provider entity receives a second request from the first network management service consumer entity, where the second request is used to request a first twin service; the network management service provider entity creates a first twin instance based on the second request, where the first twin instance includes the first data set; and the network management service provider entity executes the first twin service based on the first twin instance. That the network management service provider entity sends, to the second network management service consumer entity, the response to the first request based on the first request and the at least part of data in the first data set includes: The network management service provider entity determines, based on the first request and the first information, to use the at least part of data in the first data set to execute the second twin service; and the network management service provider entity executes the second twin service based on the at least part of data in the first data set.

With reference to the first aspect, in still another possible implementation, the method further includes: The network management service provider entity stores the first data set into a database based on the first information. That the network management service provider entity sends, to the second network management service consumer entity, the response to the first request based on the first request and the at least part of data in the first data set includes: The network management service provider entity searches the database for the at least part of data in the first data set based on the first request; and the network management service provider entity executes the second twin service based on the at least part of data in the first data set.

With reference to the first aspect, in still another possible implementation, the first information is carried in the second request.

In this implementation, the first information is carried in the second request, so that when sending the second request (when the first data set needs to be used to execute the first twin service), the first network management service consumer entity indicates that another network management service consumer entity is allowed to share the first data set. This simplifies a subsequent procedure of using the first data set, and improves data management efficiency.

With reference to the first aspect, in still another possible implementation, after the network management service provider entity receives the first request from the second network management service consumer entity, the method further includes: The network management service provider entity sends a third request to the first network management service consumer entity based on the first request, where the third request is used to request to allow sharing of the at least part of data in the first data set, and the first information is carried in a response to the third request.

With reference to the first aspect, in still another possible implementation, that the network management service provider entity sends the third request to the first network management service consumer entity based on the first request includes: The network management service provider entity determines, based on the first request, to use the at least part of data in the first data set to execute the second twin service; and the network management service provider entity sends the third request to the first network management service consumer entity.

In this implementation, after receiving a request of a network management service consumer entity other than the first network management service consumer entity, only when determining that the at least part of data in the first data set provided by the first network management service consumer entity needs to be used, the network management service provider entity requests the first network management service consumer entity to indicate whether sharing of the at least part of data in the first data set is allowed. In this way, the first network management service consumer entity can more accurately determine whether to allow the sharing of the first data set, thereby better protecting data privacy and improving data security.

With reference to the first aspect, in still another possible implementation, the method further includes: The network management service provider entity receives, from the first network management service consumer entity, a sharing policy of the first data set, where the sharing policy includes at least one of the following information: a list of network management service consumer entities that are allowed to share and use the first data set; a list of network management service consumer entities that are not allowed to share and use the first data set; a usage permission for the first data set, where the usage permission includes at least one of the following: read-only, write-only, read-write, or use-only; an identifier of data allowed to be shared in the first data set; or a type of data allowed to be shared in the first data set.

In this implementation, the first network management service consumer entity may indicate, in the sharing policy based on a privacy requirement of the first network management service consumer entity, the list of network management service consumer entities that are allowed to share and use the first data set, in other words, the network management service consumer entities in the list can share the first data set. For example, the list of network management service consumer entities that are allowed to share and use the first data set includes the second network management service consumer entity, a third network management service consumer entity, and the like, but does not include a fourth network management service consumer entity. When receiving requests from the second network management service consumer entity and the third network management service consumer entity, the network management service provider entity can share the first data set with the second network management service consumer entity and the third network management service consumer entity. When receiving a request from the fourth network management service consumer entity, the network management service provider entity cannot share the first data set with the fourth network management service consumer entity. The request is used to request a twin service.

On the contrary, the first network management service consumer entity may alternatively indicate, in the sharing policy based on a privacy requirement of the first network management service consumer entity, the list of network management service consumer entities that are not allowed to share and use the first data set, in other words, the network management service consumer entities in the list cannot share the first data set. For example, the list of network management service consumer entities that are not allowed to share and use the first data set includes a fourth network management service consumer entity, but does not include the second network management service consumer entity, a third network management service consumer entity, and the like. When receiving requests from the second network management service consumer entity and the third network management service consumer entity, the network management service provider entity can share the first data set with the second network management service consumer entity and the third network management service consumer entity. When receiving a request from the fourth network management service consumer entity, the network management service provider entity cannot share the first data set with the fourth network management service consumer entity. The request is used to request a twin service.

There are a plurality of data usage permissions. The first network management service consumer entity may indicate, in the sharing policy, the specific usage permission for the first data set. The first network management service consumer entity may indicate to share one or more of the usage permissions. Further, the first network management service consumer entity may further indicate, in a fine-grained manner, different usage permissions corresponding to different network management service consumer entities. For example, usage permissions corresponding to network management service consumer entities 1 to 10 are read-only; and usage permissions corresponding to network management service consumer entities 20 to 30 are read-write.

The first network management service consumer entity enables the sharing of the first data set by sending the first information. The first network management service consumer entity may further send the sharing policy of the first data set. The sharing policy includes the identifier of the data allowed to be shared in the first data set. For example, each data packet or each group of data in the first data set has a corresponding unique identifier. For example, the first data set includes a total of 10 data packets: id1 to id10, and identifiers of data packets allowed to be shared, as indicated in the sharing policy, are id1 and id2. In other words, it is indicated that data packets corresponding to id1 and id2 are shared, and data packets corresponding to id3 to id10 are not allowed to be shared.

The first network management service consumer entity enables the sharing of the first data set by sending the first information. The first network management service consumer entity may further send the sharing policy of the first data set. The sharing policy includes the type of the data allowed to be shared in the first data set. For example, the first data set includes the following types of data: network data, environment data, and traffic data. The type of the data allowed to be shared, as indicated in the sharing policy, is the traffic data, and sharing of the network data and the environment data is not allowed.

It may be understood that the at least one piece of information included in the sharing policy may be independent or combined. For example, the sharing policy indicates the list of the network management service consumer entities that are allowed to share and use the first data set, and the usage permission for the first data set may be further indicated in the sharing policy. For another example, the sharing policy indicates the list of the network management service consumer entities that are allowed to share and use the first data set, and the identifier and/or the type of the data allowed to be shared in the first data set may be further indicated in the sharing policy.

According to a second aspect, a data management method is provided. The method may be performed by a first network management service consumer entity, or may be performed by a chip or a circuit configured in the first network management service consumer entity, or may be performed by a logical module or software that can implement all or some functions of the first network management service consumer entity. This is not limited in this application.

The method includes: The first network management service consumer entity sends first information to a network management service provider entity, where the first information indicates that a first data set from the first network management service consumer entity is allowed to be shared.

In this aspect, when the first network management service consumer entity allows sharing of data of the first network management service consumer entity, the first network management service consumer entity indicates, to the network management service provider entity, that sharing of the data is allowed, so that when receiving a request from a second network management service consumer entity, the network management service provider entity may use the data based on the indication to execute a requested twin service, thereby improving data security.

With reference to the second aspect, in a possible implementation, the method further includes: The first network management service consumer entity sends a second request to the network management service provider entity, where the second request is used to request a first twin service; and the first data set is included in a first twin instance created by the network management service provider entity based on the second request.

With reference to the second aspect, in another possible implementation, the first information is carried in the second request.

With reference to the second aspect, in still another possible implementation, the method further includes: The first network management service consumer entity receives a third request from the network management service provider entity, where the third request is used to request to allow sharing of at least part of data in the first data set, and the first information is carried in a response to the third request.

With reference to the second aspect, in still another possible implementation, the method further includes: The first network management service consumer entity sends a sharing policy of the first data set to the network management service provider entity, where the sharing policy includes at least one of the following information: a list of network management service consumer entities that are allowed to share and use the first data set; a list of network management service consumer entities that are not allowed to share and use the first data set; a usage permission for the first data set, where the usage permission includes at least one of the following: read-only, write-only, read-write, or use-only; an identifier of data allowed to be shared in the first data set; or a type of data allowed to be shared in the first data set.

According to a third aspect, a data management method is provided. The method may be performed by a second network management service consumer entity, or may be performed by a chip or a circuit configured in the second network management service consumer entity, or may be performed by a logical module or software that can implement all or some functions of the second network management service consumer entity. This is not limited in this application.

The method includes: The second network management service consumer entity sends a first request to a network management service provider entity, where the first request is used to request a second twin service; and the second network management service consumer entity receives, from the network management service provider entity, a response to the first request, where the response includes an execution result of the second twin service, the response is obtained based on the first request and at least part of data in a first data set, the first data set is from a first network management service consumer entity, and the first network management service consumer entity indicates that the sharing of the first data set is allowed.

In this aspect, when the second network management service consumer entity requests the network management service provider entity to execute the twin service, the network management service provider entity obtains the execution result of the twin service based on the at least part of data in the first data set and the indication of the first network management service consumer entity, thereby improving twin efficiency.

With reference to the third aspect, in a possible implementation, the first request includes at least one of the following information: a twin object, a twin service type, or a service configuration.

According to a fourth aspect, a data management apparatus is provided, and may implement the method of the network management service provider entity in the first aspect or any one of the implementations of the first aspect. For example, the network management service provider entity may be a chip or a circuit. The foregoing method may be implemented by software, hardware, or hardware executing corresponding software.

In a possible implementation, the apparatus includes a transceiver unit, and may further include a processing unit. The transceiver unit is configured to receive first information from a first network management service consumer entity, where the first information indicates that a first data set from the first network management service consumer entity is allowed to be shared. The transceiver unit is further configured to receive a first request from a second network management service consumer entity, where the first request is used to request a second twin service. The transceiver unit is further configured to send, to the second network management service consumer entity, a response to the first request based on the first request and at least part of data in the first data set, where the response includes an execution result of the second twin service.

Optionally, the first request includes at least one of the following information: a twin object, a twin service type, or a service configuration.

Optionally, the transceiver unit is further configured to receive a second request from the first network management service consumer entity, where the second request is used to request a first twin service. The processing unit is configured to create a first twin instance based on the second request, where the first twin instance includes the first data set. The processing unit is further configured to execute the first twin service based on the first twin instance; the processing unit is further configured to determine, based on the first request and the first information, to use the at least part of data in the first data set to execute the second twin service; and the processing unit is further configured to execute the second twin service based on the at least part of data in the first data set.

Optionally, the processing unit is further configured to store the first data set into a database based on the first information; the processing unit is further configured to search the database for the at least part of data in the first data set based on the first request; and the processing unit is further configured to execute the second twin service based on the at least part of data in the first data set.

Optionally, the first information is carried in the second request.

Optionally, the transceiver unit is further configured to send a third request to the first network management service consumer entity based on the first request, where the third request is used to request to allow sharing of the at least part of data in the first data set, and the first information is carried in a response to the third request.

Optionally, the processing unit is further configured to determine, based on the first request, to use the at least part of data in the first data set to execute the second twin service; and the transceiver unit is further configured to send the third request to the first network management service consumer entity.

Optionally, the transceiver unit is further configured to receive, from the first network management service consumer entity, a sharing policy of the first data set, where the sharing policy includes at least one of the following information: a list of network management service consumer entities that are allowed to share and use the first data set; a list of network management service consumer entities that are not allowed to share and use the first data set; a usage permission for the first data set, where the usage permission includes at least one of the following: read-only, write-only, read-write, or use-only; an identifier of data allowed to be shared in the first data set; or a type of data allowed to be shared in the first data set.

According to a fifth aspect, a data management apparatus is provided, and may implement the method of the first network management service consumer entity in the second aspect or any one of the implementations of the second aspect. For example, the first network management service consumer entity may be a chip or a circuit. The foregoing method may be implemented by software, hardware, or hardware executing corresponding software.

In a possible implementation, the apparatus includes a transceiver unit, and may further include a processing unit. The transceiver unit is configured to send first information to a network management service provider entity, where the first information indicates that a first data set from the first network management service consumer entity is allowed to be shared.

Optionally, the transceiver unit is further configured to send a second request to the network management service provider entity, where the second request is used to request a first twin service; and the first data set is included in a first twin instance created by the network management service provider entity based on the second request.

Optionally, the first information is carried in the second request.

Optionally, the transceiver unit is further configured to receive a third request from the network management service provider entity, where the third request is used to request to allow sharing of at least part of data in the first data set, and the first information is carried in a response to the third request.

Optionally, the transceiver unit is further configured to send a sharing policy of the first data set to the network management service provider entity, where the sharing policy includes at least one of the following information: a list of network management service consumer entities that are allowed to share and use the first data set; a list of network management service consumer entities that are not allowed to share and use the first data set; a usage permission for the first data set, where the usage permission includes at least one of the following: read-only, write-only, read-write, or use-only; an identifier of data allowed to be shared in the first data set; or a type of data allowed to be shared in the first data set.

According to a sixth aspect, a data management apparatus is provided, and may implement the method of the second network management service consumer entity in the third aspect or any one of the implementations of the third aspect. For example, the second network management service consumer entity may be a chip or a circuit. The foregoing method may be implemented by software, hardware, or hardware executing corresponding software.

In a possible implementation, the apparatus includes a transceiver unit, and may further include a processing unit. The transceiver unit is configured to send a first request to a network management service provider entity, where the first request is used to request a second twin service; and the transceiver unit is further configured to receive, from the network management service provider entity, a response to the first request, where the response includes an execution result of the second twin service, the response is obtained based on the first request and at least part of data in a first data set, the first data set is from a first network management service consumer entity, and the first network management service consumer entity indicates that sharing of the first data set is allowed.

Optionally, the first request includes at least one of the following information: a twin object, a twin service type, or a service configuration.

With reference to the fourth aspect to the sixth aspect or any one of the fourth aspect to the sixth aspect, in still another possible implementation, the data management apparatus in the fourth aspect to the sixth aspect or any one of the fourth aspect to the sixth aspect includes a processor coupled to a memory, and the processor is configured to support the apparatus in performing a corresponding function in the foregoing data management method. The memory is configured to be coupled to the processor, and stores a program (instructions) and/or data necessary for the apparatus. Optionally, the data management apparatus may further include a communication interface, configured to support communication between the apparatus and another network element. Optionally, the memory may be located inside the data management apparatus, or may be located outside the data management apparatus.

With reference to the fourth aspect to the sixth aspect or any one of the fourth aspect to the sixth aspect, in still another possible implementation, the data management apparatus in the fourth aspect to the sixth aspect or any one of the fourth aspect to the sixth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from an apparatus other than the data management apparatus and transmit the signal to the processor, or send a signal from the processor to an apparatus other than the data management apparatus. When the data management apparatus is a chip, the transceiver apparatus is a transceiver circuit or an input/output interface.

When the data management apparatus in the fourth aspect to the sixth aspect or any one of the fourth aspect to the sixth aspect is a chip or a chip module, a sending unit may be an output unit, for example, an output circuit or a communication interface; and a receiving unit may be an input unit, for example, an input circuit or a communication interface. When the data management apparatus is a terminal or an access network device, a sending unit may be a transmitter or a transmitter machine, and a receiving unit may be a receiver or a receiver machine.

According to a seventh aspect, a data management system is provided, and includes the data management apparatus according to the fourth aspect or any one of the implementations of the fourth aspect, the data management apparatus according to the fifth aspect or any one of the implementations of the fifth aspect, and the data management apparatus according to the sixth aspect or any one of the implementations of the sixth aspect.

According to an eighth aspect, a computer-readable storage medium is provided. The computer-readable storage medium stores a computer program or instructions. When a computer executes the computer program or the instructions, the methods according to the foregoing aspects are implemented.

According to a ninth aspect, a computer program product including instructions is provided. When the instructions are run on a data management apparatus, the data management apparatus is caused to perform the methods according to the foregoing aspects.

### BRIEF DESCRIPTION OF DRAWINGS

FIG. 1 is a schematic flowchart of sharing a twin instance;
FIG. 2 is a diagram of data sharing;
FIG. 3 is a diagram of an architecture of a data management system;
FIG. 4 is a schematic flowchart of a data management method according to an embodiment of this application;
FIG. 5 is a schematic flowchart of another data management method according to an embodiment of this application;
FIG. 6 is a schematic flowchart of still another data management method according to an embodiment of this application;
FIG. 7 is a diagram of a structure of a data management apparatus according to an embodiment of this application; and
FIG. 8 is a diagram of a structure of another data management apparatus according to an embodiment of this application.

### DESCRIPTION OF EMBODIMENTS

The following describes embodiments of this application with reference to accompanying drawings in embodiments of this application.

Digital twin (digital twin, DT) is a technology related to system automation. DT is a virtual replica of a real-world system, and operations can be performed on the replica. Faced with increasing service types, scales, and complexity, the digital twin technology is used in communication networks to explore better solutions beyond physical networks. A twin instance, as an application of the digital twin technology in the field of communication networks, aims to develop various network applications and implement efficient data-driven network management and maintenance.

A network digital twin instance (network digital twin instance, NDT instance) (referred to as a "twin instance" for short) is a digital twin whose physical counterpart is a communication network or a part of the communication network. The communication network may include, for example, a physical network element and component, a virtual network function (virtual network function, VNF) (that is, a network function element instantiated as a software-based entity), and a physical host, a service, and traffic that are used for the VNF.

Specifically, the twin instance means that a digital mirror of the physical network (physical network) is established in a digitalized manner, and the physical network is digitalized by using historical network data, real-time network data, and an algorithm model of the physical network, to implement synchronous analysis and prediction on the physical network, and improve and optimize the physical network. That is, the twin instance includes a digital representation of the physical network, and is for simulating the physical network. The digital representation includes the algorithm model, the data, and the like. The twin instance may also be referred to as a network twin. This is not limited in this application. The physical network is a network formed by connecting various physical devices or network elements (for example, hosts, routers, or switches) and media (optical cables, cables, twisted pairs, or the like) in the network. The physical network may be a mobile access network, a transport network, a mobile core network, a backbone network, or the like. The physical network may alternatively be a data center network, a campus network, an industrial internet of things, or the like. The network data may also be referred to as network running data, indicating a running status of the physical network, and may be a configuration parameter, alarm data, performance data, or the like of the physical device or the network element.

An important application of the twin instance is simulation. In simulation, the twin instance serves as a security sandbox to securely verify impact of a specific network management operation instruction on the physical network after the instruction is sent to the physical network, for example, verify a network element energy saving solution. The twin instance can also be used to model behavior of a real network to obtain an estimation of expected network behavior. For example, the twin instance can be used for latency prediction and network fault prediction.

As described above, the twin instance includes the digital representation of the physical network, and is for simulating the physical network. The digital representation includes the algorithm model, the data, and the like. The model can be used to represent basic network information (including network element information, topologies, and the like) or to simulate the physical network.

A plurality of network management service consumer entities may send a plurality of twin service requests to a network management service provider entity simultaneously or at different times. The network management service provider entity can enable a plurality of twin services to share network twin capabilities efficiently and independently by concurrently processing the plurality of twin service requests. All or some of basis data, models, and functions of the plurality of twin service requests may be similar. Therefore, to achieve efficient resource utilization, similar twin service requests may be identified for twin instance sharing.

Therefore, in a current network digital twin service, when the network management service provider entity receives similar twin service requests delivered in a same period, resource utilization may be improved by sharing a twin instance. Content that can be shared includes data, models, and capabilities provided by the models. To determine whether sharing can be performed, the network management service provider entity analyzes a to-be-constructed twin instance based on a twin object, a twin service type, and a service configuration needed by a received service request, compares the twin instance with an existing twin instance. If there are identical parts between the twin instance and the existing twin instance, sharing can be performed. There are three sharing modes.
1. Create a new twin instance: If no existing twin instance can provide data or a model for the current request, a new twin instance completely independent of the existing twin instance is created.
2. Fully share the twin instance: All models and capabilities of the existing twin instance are directly shared without creating a new twin instance. When the network management service provider entity finds that an existing twin instance can fulfill all twin objects, service configurations, and twin service types needed by the current twin service request, no twin instance is created. Instead, the existing twin instance is used to fulfill the twin service request.
3. Partially share the twin instance: Some models or capabilities of the existing twin instance are shared to form a partially shared twin instance.

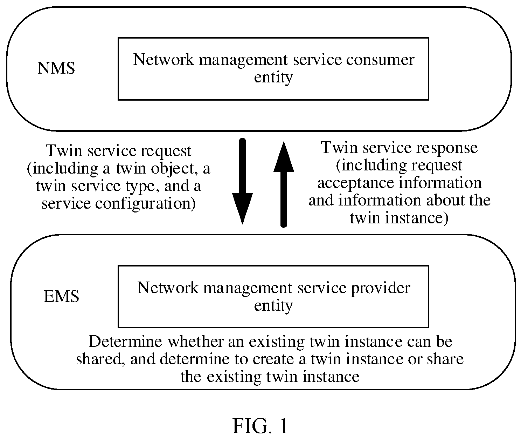

FIG. 1 is a schematic flowchart of sharing a twin instance according to an embodiment of this application. A network management service consumer entity sends a twin service request to a network management service provider entity, where the twin service request includes a twin object, a twin service type, and a service configuration. The network management service provider entity determines whether an existing twin instance can be shared, and determines to create a twin instance or share the existing twin instance. The network management service provider entity sends a twin service response to the network management service consumer entity, where the twin service response includes request acceptance information and information about the twin instance, and the twin instance may be newly created or shared. Further, the network management service provider entity may also trigger deletion of a twin instance that is no longer needed. Based on the request of the network management service consumer entity, the network management service provider entity may further provide a network digital twin resource utilization report.

The foregoing describes sharing of the twin instance. However, when a twin service is executed, sharing of other data may also be included.

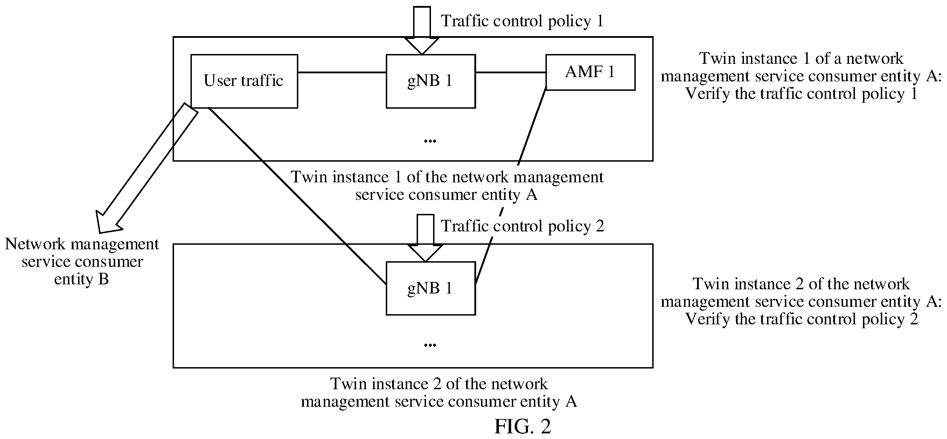

For example, FIG. 2 is a diagram of data sharing according to an embodiment of this application. In a signaling storm scenario, a network management service consumer entity A obtains current user traffic information in an area 1 in a manner, and five possible traffic control policies need to be verified. The network management service consumer entity A expects to verify these policies on twin instances by using the user traffic information, to find an optimal policy.

A network management service provider entity may implement sharing of the twin instances. The network management service consumer entity A may verify the five traffic control policies by using five twin instances (a twin instance 1 to a twin instance 5). The twin instance 1 is newly created, and the twin instances 2 to 5 are partially shared twin instances that share the created twin instance 1, namely, share user traffic information, an access and mobility management function (access and mobility management function, AMF) network element model, and the like of the twin instance 1.

However, when a network management service consumer entity B needs to monitor traffic in the same area (that is, the area 1), the network management service consumer entity B also sends a twin service request to the network management service provider entity. In this case, because the network management service provider entity finds that the user traffic information in the area has been obtained from the network management service consumer entity A, the network management service provider entity directly provides the user traffic information for the network management service consumer entity B for use. The user traffic information is data initially injected by the network management service consumer entity A, but after the twin instance is constructed, no distinction is made regarding a source of the data. This causes a data exposure problem of the network management service consumer entity A, and reduces data security of the network management service consumer entity A.

The foregoing data may be included in the twin instance. Currently, twin instance sharing can be used for all twin service requests. However, if twin instance sharing is directly performed for all the twin service requests, privacy data may be exposed between different twin services, greatly reducing data security. For example, in the foregoing example, currently, whether to perform sharing is determined only based on content and data similarity of the twin instances, without considering that some data is only of the network management service consumer entity A and the network management service consumer entity A may not expect to share the data. Therefore, a requirement of the network management service consumer entity A on data privacy is not met.

The data may alternatively be independent of the twin instance. The data is used to execute a twin service. The network management service consumer entity that injects the data may not expect to share the data either.

Therefore, security and privacy of the data used to execute the twin service need to be ensured.

In view of this, this application provides a data management solution. A network management service consumer entity that provides data indicates, to a network management service provider entity, that sharing of the data is allowed, so that when receiving a request from another network management service consumer entity, the network management service provider entity may use the data based on the indication to execute a requested twin service, thereby improving data security.

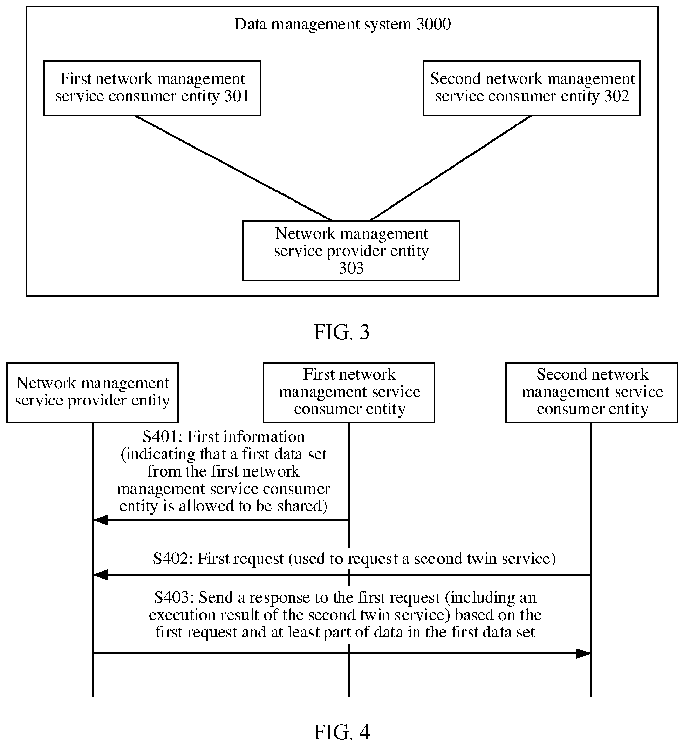

FIG. 3 is a diagram of an architecture of a data management system according to an embodiment of this application. The data management system 3000 includes a first network management service consumer entity 301, a second network management service consumer entity 302, and a network management service provider entity 303. The first network management service consumer entity 301 and the second network management service consumer entity 302 may interact with the network management service provider entity 303. For example, the first network management service consumer entity 301 and the second network management service consumer entity 302 may be located in a network management system (network management system, NMS), and the network management service provider entity 303 may be located in an equipment management system (equipment management system, EMS). The first network management service consumer entity 301 and the second network management service consumer entity 302 are configured to make a request (request a twin service, for example, invoke a simulation service of a twin instance) and receive a response. The network management service provider entity 303 is configured to execute the twin service, for example, may perform simulation based on the request, send a network management operation instruction to a physical network, and the like.

Based on the data management system, the following describes a data management method provided in this application.

FIG. 4 is a schematic flowchart of a data management method according to an embodiment of this application. For example, the method may include the following steps.

S401: A first network management service consumer entity sends first information to a network management service provider entity.

Correspondingly, the network management service provider entity receives the first information.

The first information may indicate that a first data set from the first network management service consumer entity is allowed to be shared.

That the first network management service consumer entity sends the first information has the following two meanings.

In an implementation, that the first network management service consumer entity sends the first information means that the entire first data set may be shared with any other network management service consumer entity.

In another implementation, that the first network management service consumer entity sends the first information means that the sharing of the first data set is enabled. However, a specific entity that the first data set can be shared with, a usage permission for data, and specific shared content are further determined according to a sharing policy of the first data set. Therefore, the first network management service consumer entity may further send the sharing policy of the first data set to the network management service provider entity.

The sharing policy may include at least one of the following information:
a list (referred to as a "whitelist") of network management service consumer entities that are allowed to share and use the first data set;
a list (referred to as a "blacklist") of network management service consumer entities that are not allowed to share and use the first data set;
a usage permission for the first data set, where the usage permission includes at least one of the following: read-only, write-only, read-write, or use-only;
an identifier of data allowed to be shared in the first data set; or
a type of data allowed to be shared in the first data set.

The first network management service consumer entity may indicate, in the sharing policy based on a privacy requirement of the first network management service consumer entity, the list of network management service consumer entities that are allowed to share and use the first data set, in other words, the network management service consumer entities in the list can share the first data set. For example, the list of network management service consumer entities that are allowed to share and use the first data set includes a second network management service consumer entity, a third network management service consumer entity, and the like, but does not include a fourth network management service consumer entity. When receiving requests from the second network management service consumer entity and the third network management service consumer entity, the network management service provider entity can share the first data set with the second network management service consumer entity and the third network management service consumer entity. When receiving a request from the fourth network management service consumer entity, the network management service provider entity cannot share the first data set with the fourth network management service consumer entity. The request is used to request a twin service.

On the contrary, the first network management service consumer entity may alternatively indicate, in the sharing policy based on a privacy requirement of the first network management service consumer entity, the list of network management service consumer entities that are not allowed to share and use the first data set, in other words, the network management service consumer entities in the list cannot share the first data set. For example, the list of network management service consumer entities that are not allowed to share and use the first data set includes a fourth network management service consumer entity, but does not include a second network management service consumer entity, a third network management service consumer entity, and the like. When receiving requests from the second network management service consumer entity and the third network management service consumer entity, the network management service provider entity can share the first data set with the second network management service consumer entity and the third network management service consumer entity. When receiving a request from the fourth network management service consumer entity, the network management service provider entity cannot share the first data set with the fourth network management service consumer entity. The request is used to request a twin service.

There are a plurality of data usage permissions. The first network management service consumer entity may indicate, in the sharing policy, the specific usage permission for the first data set. The first network management service consumer entity may indicate to share one or more of the usage permissions. Further, the first network management service consumer entity may further indicate, in a fine-grained manner, different usage permissions corresponding to different network management service consumer entities. For example, usage permissions corresponding to network management service consumer entities 1 to 10 are read-only; and usage permissions corresponding to network management service consumer entities 20 to 30 are read-write.

The first network management service consumer entity enables the sharing of the first data set by sending the first information. The first network management service consumer entity may further send the sharing policy of the first data set. The sharing policy includes the identifier of the data allowed to be shared in the first data set. For example, each data packet or each group of data in the first data set has a corresponding unique identifier. For example, the first data set includes a total of 10 data packets: id1 to id10, and identifiers of data packets allowed to be shared, as indicated in the sharing policy, are id1 and id2. In other words, it is indicated that data packets corresponding to id1 and id2 are shared, and data packets corresponding to id3 to id10 are not allowed to be shared.

The first network management service consumer entity enables the sharing of the first data set by sending the first information. The first network management service consumer entity may further send the sharing policy of the first data set. The sharing policy includes the type of the data allowed to be shared in the first data set. For example, the first data set includes the following types of data: network data, environment data, and traffic data. The type of the data allowed to be shared, as indicated in the sharing policy, is the traffic data, and sharing of the network data and the environment data is not allowed.

It may be understood that the at least one piece of information included in the sharing policy may be independent or combined. For example, the sharing policy indicates the list of the network management service consumer entities that are allowed to share and use the first data set, and the usage permission for the first data set may be further indicated in the sharing policy. For another example, the sharing policy indicates the list of the network management service consumer entities that are allowed to share and use the first data set, and the identifier and/or the type of the data allowed to be shared in the first data set may be further indicated in the sharing policy. For example, the first information and the sharing policy of the first data set may be included in different messages, or may be included in a same message.

The first data set is provided by the first network management service consumer entity for the network management service provider entity. The first data set may include user data of the first network management service consumer entity. The data may be one or more data packets, or may be a specific type of data. This is not limited. For example, when requesting the network management service provider entity to execute a first twin service or before requesting the network management service provider entity to execute a first twin service, the first network management service consumer entity provides the first data set for the network management service provider entity. The first data set may be separately sent by the first network management service consumer entity to the network management service provider entity, or may be carried in a request sent to the network management service provider entity, where the request is used for the first twin service.

Because the first data set is provided by the first network management service consumer entity, which may be privacy data of the first network management service consumer entity, the first network management service consumer entity may determine whether to share the first data set with another network management service consumer entity.

It should be noted that step S401 is optional, and another implementation may be used. For example, if the first network management service consumer entity does not send the first information to the network management service provider entity, the network management service provider entity cannot share the first data set with another network management service consumer entity. For another example, the first network management service consumer entity sends second information to the network management service provider entity, where the second information indicates that the sharing of the first data set from the first network management service consumer entity is not allowed. Therefore, the network management service provider entity cannot share the first data set with another network management service consumer entity, but may share data other than the first data set with another network management service consumer entity. In this way, privacy of data from the first network management service consumer entity can be protected, thereby improving data security.

S402: The second network management service consumer entity sends a first request to the network management service provider entity.

Correspondingly, the network management service provider entity receives the first request.

In a communication scenario, another network management service consumer entity (for example, the second network management service consumer entity) may further send the first request to the network management service provider entity.

The first request is used to request a second twin service.

The second network management service consumer entity is any network management service consumer entity other than the first network management service consumer entity.

S403: The network management service provider entity sends, to the second network management service consumer entity, a response to the first request based on the first request and at least part of data in the first data set.

Correspondingly, the second network management service consumer entity receives the response. The response may include an execution result of the second twin service. For example, the second twin service is simulation of a policy, and the execution result may include a simulation result indicating whether an expected effect can be achieved by executing the policy in a physical network.

For example, after receiving the first request, the network management service provider entity determines that the at least part of data in the first data set needs to be used when the second twin service is executed. Further, if the network management service provider entity has received the first information, the network management service provider entity uses the at least part of data in the first data set to execute the second twin service, to obtain the execution result of the second twin service, and sends, to the second network management service consumer entity, the response to the first request.

The at least part of data may be a part or all of data in the first data set. This is not limited.

According to the data management method provided in this embodiment of this application, the first network management service consumer entity that provides data indicates, to the network management service provider entity, that sharing of the data is allowed, so that when receiving a request from the second network management service consumer entity, the network management service provider entity may use the data based on the indication to execute a requested twin service, thereby improving data security.

Optionally, in an implementation scenario of the foregoing embodiment, the method further includes: The network management service provider entity receives a second request from the first network management service consumer entity, where the second request is used to request a first twin service; the network management service provider entity creates a first twin instance based on the second request, where the first twin instance includes the first data set; and the network management service provider entity executes the first twin service based on the first twin instance.

In this case, step S403 may include: The network management service provider entity determines, based on the first request and the first information, to use the at least part of data in the first data set to execute the second twin service; and the network management service provider entity executes the second twin service based on the at least part of data in the first data set.

In this implementation scenario, the first data set is included in the first twin instance. When executing the second twin service, the network management service provider entity needs to execute the second twin service based on a twin instance. When receiving the first request, the network management service provider entity determines to create a twin instance, partially share an existing twin instance (for example, the first twin instance), or fully share an existing twin instance. In a conventional technology, all currently created twin instances can be shared and reused by default. However, because privacy requirements of data in the twin instances are different, an existing method cannot ensure isolation and security of the data in the twin instances. In this embodiment, when parsing and executing the second twin service, the network management service provider entity determines, based on the first information, that the first twin instance can be shared to execute the second twin service. If the first network management service consumer entity does not include the first information in the second request, or the first network management service consumer entity indicates that sharing of the first twin instance is not allowed, the network management service provider entity cannot share the first twin instance to execute the second twin service. The first data set is included in the first twin instance. When the first twin instance is partially or fully shared to execute the second twin service, it is considered that the first data set is partially or fully used.

After receiving the first request, the network management service provider entity parses a second twin object, a second twin service type, or a second service configuration included in the first request, and determines to use the at least part of data in the first data set to execute the second twin service. The at least part of data in the first data set may be a part or all of data in the first data set.

Still refer to FIG. 2. When requesting the network management service provider entity to execute a traffic control policy simulation service of the network management service consumer entity A, the network management service consumer entity A provides user traffic data for the network management service provider entity. When the network management service consumer entity B requests the network management service provider entity to execute another policy (for example, an energy saving policy) of the network management service consumer entity B, the network management service provider entity determines that the user traffic data also needs to be used to execute the policy of the network management service consumer entity B.

After the network management service provider entity determines to use the at least part of data in the first data set to execute the second twin service, and determines, based on the first information, that the first network management service consumer entity allows the sharing of the first data set, the network management service provider entity uses the at least part of data in the first data set to execute the second twin service.

Optionally, in another implementation scenario of the foregoing embodiment, the method further includes: The network management service provider entity stores the first data set into a database based on the first information.

In this case, step S403 may include: The network management service provider entity searches the database for the at least part of data in the first data set based on the first request; and the network management service provider entity executes the second twin service based on the at least part of data in the first data set.

In this implementation scenario, when the first data set is not included in the first twin instance, but is separately stored into the database, after receiving the first request, the network management service provider entity determines, based on the first request, to use the at least part of data in the first data set to execute the second twin service. In addition, the network management service provider entity determines, based on the first information, that the first network management service consumer entity allows the sharing of the first data set. The network management service provider entity searches the database for the at least part of data in the first data set, and executes the second twin service based on the at least part of data in the first data set. In this scenario, the network management service provider entity may execute the second twin service based on a twin instance, or may not execute the second twin service based on a twin instance.

In a scenario, the first information may be carried in the second request sent by the first network management service consumer entity. The following provides descriptions by using an embodiment.

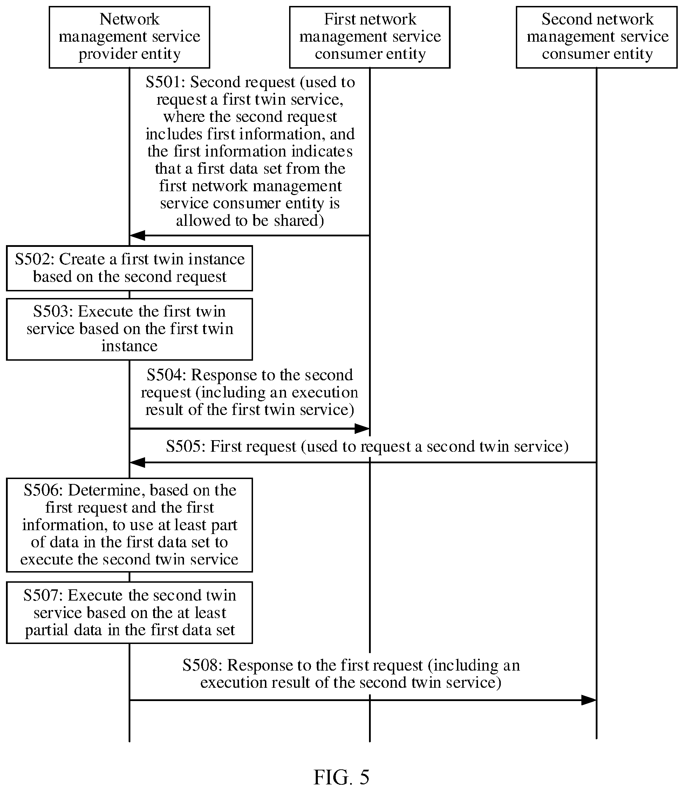

FIG. 5 is a schematic flowchart of another data management method according to an embodiment of this application. For example, the method may include the following steps.

S501: A first network management service consumer entity sends a second request to a network management service provider entity.

Correspondingly, the network management service provider entity receives the second request.

The second request is used to request a first twin service, that is, used to request the network management service provider entity to execute the first twin service.

The second request may include at least one of the following information: a first twin object, a first twin service type, or a first service configuration. For example, the first twin object may be a network element, for example, an AMF, in a communication system. The first twin service type may be simulation of executing a policy in a physical network, or the like. The first service configuration may be a resource configuration needed for executing the policy, or the like.

In this embodiment, the first network management service consumer entity provides a first data set for the network management service provider entity. For example, when requesting the network management service provider entity to execute the first twin service or before requesting the network management service provider entity to execute the first twin service, the first network management service consumer entity provides the first data set for the network management service provider entity.

The first data set may be separately sent by the first network management service consumer entity to the network management service provider entity (this step of separately sending the first data set may be performed before step S501, or may be performed simultaneously with step S501, or may be performed after step S501, which is not limited in this application), or may be carried in the second request. This is not limited.

Because the first data set is provided by the first network management service consumer entity, and may be privacy data of the first network management service consumer entity, the first network management service consumer entity may determine whether to share the first data set with another network management service consumer entity.

The second request may further include first information. The first information indicates that sharing of the first data set from the first network management service consumer entity is allowed.

It should be noted that, if the second request does not include the first information, the network management service provider entity cannot share the first data set with another network management service consumer entity. Alternatively, if the second request includes second information, where the second information indicates that the sharing of the first data set from the first network management service consumer entity is not allowed, the network management service provider entity cannot share the first data set with another network management service consumer entity. In this way, privacy of data from the first network management service consumer entity can be protected, thereby improving data security. The first information is carried in the second request, so that when sending the second request (when the first data set needs to be used to execute the first twin service), the first network management service consumer entity indicates that another network management service consumer entity is allowed to share the first data set. This simplifies a subsequent procedure of using the first data set, and improves data management efficiency.

Optionally, the first network management service consumer entity may further indicate, by indicating a sharing policy of the first data set, whether different data in the first data set can participate in sharing, to implement partial sharing of the data without a privacy risk. Therefore, the first network management service consumer entity may further send the sharing policy of the first data set to the network management service provider entity. For details, refer to related descriptions in step S401. Details are not described again.

S502: The network management service provider entity creates a first twin instance based on the second request.

In this embodiment, the network management service provider entity executes the first twin service based on a twin instance. Therefore, after receiving the second request, the network management service provider entity creates the first twin instance based on the second request.

For example, creating the first twin instance means obtaining corresponding data from the physical network and obtaining a corresponding model based on at least one of the following information included in the second request: the first twin object, the first twin service type, or the first service configuration. The first twin instance is used to simulate a network environment in which a physical network operation included in the first twin service is performed in the physical network.

S503: The network management service provider entity executes the first twin service based on the first twin instance. After creating the first twin instance, the network management service provider entity executes the first twin service based on the first twin instance. For example, if the first twin service is simulation of an energy saving policy, executing the first twin service means simulating execution of the energy saving policy in the physical network, and obtaining an execution result, for example, achieving an energy saving effect.

When executing the first twin service, the network management service provider entity needs to use the first data set.

In an implementation, the first data set may be included in the first twin instance. To be specific, when creating the first twin instance, the network management service provider entity includes the first data set in the first twin instance. In this case, the first information may indicate that sharing of the first twin instance is allowed. After receiving the first information, the network management service provider entity may determine that the first network management service consumer entity allows the sharing of the first data set in the first twin instance.

In another implementation, the first data set may be independent of the first twin instance, that is, the first twin instance created by the network management service provider entity does not include the first data set. After receiving the first data set, the network management service provider entity may store the first data set into a database.

S504: The network management service provider entity sends, to the first network management service consumer entity, a response to the second request.

Correspondingly, the first network management service consumer entity receives the response.

The response includes an execution result of the first twin service.

S505: A second network management service consumer entity sends a first request to the network management service provider entity.

Correspondingly, the network management service provider entity receives the first request.

In a communication scenario, another network management service consumer entity (for example, the second network management service consumer entity) may further send the first request to the network management service provider entity. The first request is used to request a second twin service. The second network management service consumer entity is any network management service consumer entity other than the first network management service consumer entity.

The first request includes at least one of the following information: a second twin object, a second twin service type, or a second service configuration. For meanings of the second twin object, the second twin service type, and the second service configuration, refer to descriptions of the first twin object, the first twin service type, and the first service configuration. Details are not described herein.

S506: The network management service provider entity determines, based on the first request and the first information, to use at least part of data in the first data set to execute the second twin service.

After receiving the first request, the network management service provider entity parses the second twin object, the second twin service type, or the second service configuration included in the first request, and determines that the at least part of data in the first data set needs to be used to execute the second twin service. The at least part of data in the first data set may be a part or all of data in the first data set.

Still refer to FIG. 2. When requesting the network management service provider entity to execute a traffic control policy simulation service of the network management service consumer entity A, the network management service consumer entity A provides user traffic data for the network management service provider entity. When the network management service consumer entity B requests the network management service provider entity to execute another policy (for example, an energy saving policy) of the network management service consumer entity B, the network management service provider entity determines that the user traffic data also needs to be used to execute the policy of the network management service consumer entity B.

S507: The network management service provider entity executes the second twin service based on the at least part of data in the first data set.

After the network management service provider entity determines to use the at least part of data in the first data set to execute the second twin service, and determines, based on the first information, that the first network management service consumer entity allows the sharing of the first data set, the network management service provider entity uses the at least part of data in the first data set to execute the second twin service.

For specific implementations of steps S506 and S507, refer to related descriptions in the embodiment shown in FIG. 4. Details are not described herein.

S508: The network management service provider entity sends, to the second network management service consumer entity, a response to the first request.

Correspondingly, the second network management service consumer entity receives the response.

After executing the second twin service, the network management service provider entity obtains an execution result of the second twin service. The network management service provider entity sends, to the second network management service consumer entity, the response to the first request. The response includes the execution result of the second twin service.

According to the data management method provided in this embodiment of this application, the first network management service consumer entity that provides data indicates, to the network management service provider entity, that sharing of the data is allowed, so that when receiving a request from the second network management service consumer entity, the network management service provider entity may use the data based on the indication to execute a requested twin service, thereby improving data security. In addition, the first information is carried in the second request, so that when sending the second request (when the first data set needs to be used to execute the first twin service), the first network management service consumer entity indicates that another network management service consumer entity is allowed to share the first data set, thereby simplifying a subsequent procedure of using the first data set, and improving data management efficiency.

In another scenario, because not all network management service consumer entities need to use the first data set when requesting twin services, the first information is not carried in the twin service request sent by the first network management service consumer entity. Instead, after receiving the twin service request from the second network management service consumer entity, only when determining that the at least part of data in the first data set needs to be used, the network management service provider entity requests the first network management service consumer entity to indicate whether the at least part of data in the first data set can be shared. The following provides descriptions by using an embodiment.

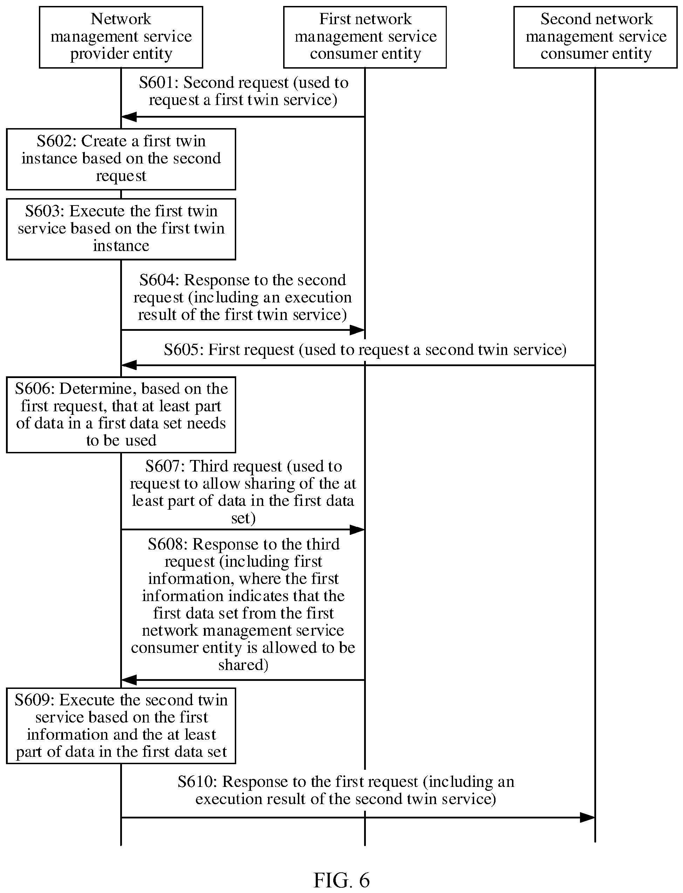

FIG. 6 is a schematic flowchart of still another data management method according to an embodiment of this application. For example, the method may include the following steps.

S601: A first network management service consumer entity sends a second request to a network management service provider entity.

Correspondingly, the network management service provider entity receives the second request.

The second request is used to request a first twin service. The second request may include at least one of the following information: a first twin object, a first twin service type, or a first service configuration.

In an implementation, the second request further includes the first data set.

In another implementation, the first network management service consumer entity separately sends the first data set to the network management service provider entity. This step may be performed before step S601, or may be performed simultaneously with step S601, or may be performed after step S601. This is not limited in this application.

For a specific implementation of this step, refer to step S501 in the embodiment shown in FIG. 5. Different from that in step S501, the second request does not include the first information, that is, does not include information indicating that sharing of the first data set is allowed.

S602: The network management service provider entity creates a first twin instance based on the second request.

For a specific implementation of this step, refer to step S502 in the embodiment shown in FIG. 5.

S603: The network management service provider entity executes the first twin service based on the first twin instance.

For a specific implementation of this step, refer to step S503 in the embodiment shown in FIG. 5.

S604: The network management service provider entity sends, to the first network management service consumer entity, a response to the second request. Correspondingly, the first network management service consumer entity receives the response.

The response includes an execution result of the first twin service.

For a specific implementation of this step, refer to step S504 in the embodiment shown in FIG. 5.

S605: A second network management service consumer entity sends a first request to the network management service provider entity. Correspondingly, the network management service provider entity receives the first request.

The first request is used to request a second twin service. The first request includes at least one of the following information: a second twin object, a second twin service type, or a second service configuration.

For a specific implementation of this step, refer to step S505 in the embodiment shown in FIG. 5.

S606: The network management service provider entity determines, based on the first request, that at least part of data in the first data set needs to be used.

For a specific implementation of this step, refer to step S506 in the embodiment shown in FIG. 5.

S607: The network management service provider entity sends a third request to the first network management service consumer entity. Correspondingly, the first network management service consumer entity receives the third request.

In this embodiment, after determining, based on the first request, that the at least part of data in the first data set needs to be used, the network management service provider entity sends the third request to the first network management service consumer entity. The third request is used to request to allow sharing of the at least part of data in the first data set. Further, the third request may further include an identifier of the second network management service consumer entity.

In some communication scenarios, because not all network management service consumer entities need to use the first data set when requesting twin services, after receiving a request of a network management service consumer entity other than the first network management service consumer entity, only when determining that the at least part of data in the first data set provided by the first network management service consumer entity needs to be used, the network management service provider entity requests the first network management service consumer entity to indicate whether sharing of the at least part of data in the first data set is allowed. In this way, the first network management service consumer entity can more accurately determine whether to allow the sharing of the first data set, thereby better protecting data privacy and improving data security.

S608: The first network management service consumer entity sends, to the network management service provider entity, a response to the third request. Correspondingly, the network management service provider entity receives the response.

After receiving the third request from the network management service provider entity, the first network management service consumer entity determines whether to allow the sharing of the first data set, and sends, to the network management service provider entity, the response to the third request. The response includes the first information. The first information indicates that the sharing of the first data set from the first network management service consumer entity is allowed.

Further, the first network management service consumer entity may further indicate, by indicating a sharing policy of the first data set, whether different data in the first data set can participate in sharing, to implement partial sharing of the data without a privacy risk. Therefore, the first network management service consumer entity may further send the sharing policy of the first data set to the network management service provider entity.

The sharing policy includes at least one of the following information:
a list of network management service consumer entities that are allowed to share and use the first data set;
a list of network management service consumer entities that are not allowed to share and use the first data set;
a usage permission for the first data set, where the usage permission includes at least one of the following: read-only, write-only, read-write, or use-only;
an identifier of data allowed to be shared in the first data set; or
a type of data allowed to be shared in the first data set.

For a meaning of the sharing policy, refer to the foregoing descriptions.

S609: The network management service provider entity executes the second twin service based on the first information and the at least part of data in the first data set.

For a specific implementation of this step, refer to step S507 in the embodiment shown in FIG. 5.

S610: The network management service provider entity sends, to the second network management service consumer entity, a response to the first request. Correspondingly, the second network management service consumer entity receives the response.

The response includes an execution result of the second twin service.

For a specific implementation of this step, refer to step S508 in the embodiment shown in FIG. 5.

According to the data management method provided in this embodiment of this application, after receiving a request of a network management service consumer entity other than the first network management service consumer entity, only when determining that the at least part of data in the first data set provided by the first network management service consumer entity needs to be used, the network management service provider entity requests the first network management service consumer entity to indicate whether sharing of the at least part of data in the first data set is allowed. In this way, the first network management service consumer entity can more accurately determine whether to allow the sharing of the first data set, thereby better protecting data privacy and improving data security.

It may be understood that, in the foregoing embodiments, the methods and/or the steps implemented by the network management service provider entity may alternatively be implemented by a component (for example, a chip or a circuit) that may be used in the network management service provider entity. The methods and/or the steps implemented by the first network management service consumer entity may alternatively be implemented by a component (for example, a chip or a circuit) that may be used in the first network management service consumer entity. The methods and/or steps implemented by the second network management service consumer entity may alternatively be implemented by a component (for example, a chip or a circuit) that may be used in the second network management service consumer entity.

The foregoing mainly describes the solutions provided in embodiments of this application from a perspective of interaction between entities. Correspondingly, embodiments of this application further provide a data management apparatus. The data management apparatus is configured to implement the foregoing methods. The data management apparatus may be the network management service provider entity in the foregoing method embodiments or a component that can be used in the network management service provider entity; the data management apparatus may be the first network management service consumer entity in the foregoing method embodiments or a component that can be used in the first network management service consumer entity; or the data management apparatus may be the second network management service consumer entity in the foregoing method embodiments or a component that can be used in the second network management service consumer entity. It can be understood that, to implement the foregoing functions, the data management apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional modules may be performed on the data management apparatus based on the foregoing method embodiments. For example, division into functional modules may be performed based on corresponding functions, or two or more functions may be integrated into one processing unit. The integrated module may be implemented in a form of hardware, or may be implemented in a form of a software functional module. It should be noted that, in embodiments of this application, division into modules is an example, and is merely a logical function division. During actual implementation, another division manner may be used.

Based on a same concept of the foregoing data management method, this application further provides the following data management apparatus.

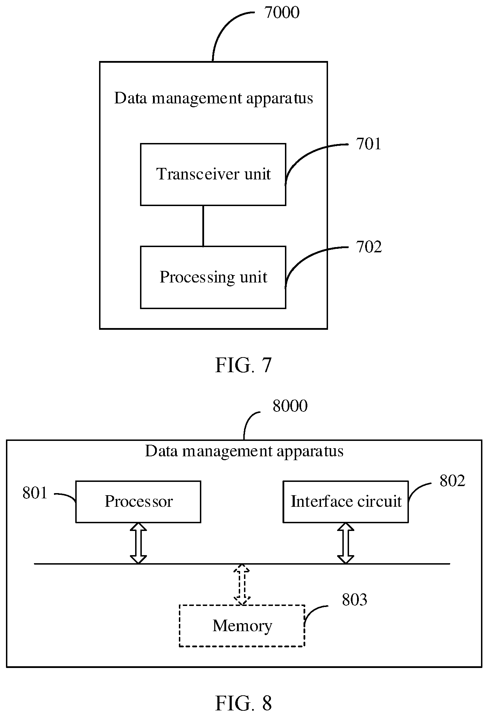

FIG. 7 is a diagram of a structure of a data management apparatus according to an embodiment of this application. The data management apparatus 7000 includes a transceiver unit 701 and a processing unit 702.

When the data management apparatus is configured to implement a function of the network management service provider entity in the foregoing method embodiment, the transceiver unit 701 is configured to perform one or more of steps S401 to S403 performed by the network management service provider entity in the embodiment shown in FIG. 4; the transceiver unit 701 is configured to perform one or more of steps S501, S504, S505, and S508 performed by the network management service provider entity in the embodiment shown in FIG. 5, and the processing unit 702 is configured to perform one or more of steps S502, S503, S506, and S507 in the embodiment shown in FIG. 5; or the transceiver unit 701 is configured to perform one or more of steps S601, S604, S605, S607, S608, and S610 performed by the network management service provider entity in the embodiment shown in FIG. 6, and the processing unit 702 is configured to perform one or more of steps S602, S603, S606, and S609 in the embodiment shown in FIG. 6.

When the data management apparatus is configured to implement a function of the first network management service consumer entity in the foregoing method embodiment, the transceiver unit 701 is configured to perform the step performed by the first network management service consumer entity in step S401 in the embodiment shown in FIG. 4; the transceiver unit 701 is configured to perform one or more of steps S501 and S504 performed by the first network management service consumer entity in the embodiment shown in FIG. 5; or the transceiver unit 701 is configured to perform one or more of steps S601, S604, S607, and S608 performed by the first network management service consumer entity in the embodiment shown in FIG. 6.

When the data management apparatus is configured to implement a function of the second network management service consumer entity in the foregoing method embodiment, the transceiver unit 701 is configured to perform one or more of steps S402 and S403 performed by the second network management service consumer entity in the embodiment shown in FIG. 4; the transceiver unit 701 is configured to perform one or more of steps S505 and S508 performed by the second network management service consumer entity in the embodiment shown in FIG. 5; or the transceiver unit 701 is configured to perform one or more of steps S605 and S610 performed by the second network management service consumer entity in the embodiment shown in FIG. 6.

For specific implementations of the transceiver unit 701 and the processing unit 702, refer to descriptions in the foregoing method embodiments. Details are not described herein.

FIG. 8 is a diagram of a structure of another data management apparatus according to an embodiment of this application. The data management apparatus 8000 includes a processor 801 and an interface circuit 802, and may further include a memory 803 (represented by a dashed line in the figure). The processor 801 and the interface circuit 802 are coupled to each other. It may be understood that the interface circuit 802 may be a transceiver or an input/output interface. The memory 803 is configured to: store instructions executed by the processor 801, store input data needed by the processor 801 to run the instructions, or store data generated after the processor 801 runs the instructions.

When the data management apparatus is configured to implement a function of the network management service provider entity in the foregoing method embodiment, the interface circuit 802 is configured to perform one or more of steps S401 to S403 performed by the network management service provider entity in the embodiment shown in FIG. 4; the interface circuit 802 is configured to perform one or more of steps S501, S504, S505, and S508 performed by the network management service provider entity in the embodiment shown in FIG. 5, and the processor 801 is configured to perform one or more of steps S502, S503, S506, and S507 in the embodiment shown in FIG. 5; or the interface circuit 802 is configured to perform one or more of steps S601, S604, S605, S607, S608, and S610 performed by the network management service provider entity in the embodiment shown in FIG. 6, and the processor 801 is configured to perform one or more of steps S602, S603, S606, and S609 in the embodiment shown in FIG. 6.

When the data management apparatus is configured to implement a function of the first network management service consumer entity in the foregoing method embodiment, the interface circuit 802 is configured to perform the step performed by the first network management service consumer entity in step S401 in the embodiment shown in FIG. 4; the interface circuit 802 is configured to perform one or more of steps S501 and S504 performed by the first network management service consumer entity in the embodiment shown in FIG. 5; or the interface circuit 802 is configured to perform one or more of steps S601, S604, S607, and S608 performed by the first network management service consumer entity in the embodiment shown in FIG. 6.

When the data management apparatus is configured to implement a function of the second network management service consumer entity in the foregoing method embodiment, the interface circuit 802 is configured to perform one or more of steps S402 and S403 performed by the second network management service consumer entity in the embodiment shown in FIG. 4; the interface circuit 802 is configured to perform one or more of steps S505 and S508 performed by the second network management service consumer entity in the embodiment shown in FIG. 5; or the interface circuit 802 is configured to perform one or more of steps S605 and S610 performed by the second network management service consumer entity in the embodiment shown in FIG. 6.

When the data management apparatus is a chip used in the network management service provider entity, the chip implements a function of the network management service provider entity in the foregoing method embodiments. The chip receives information from another module (for example, a radio frequency module or an antenna) in the network management service provider entity, where the information is sent by the first network management service consumer entity or the second network management service consumer entity to the network management service provider entity; or the chip sends information to another module (for example, a radio frequency module or an antenna) in the network management service provider entity, where the information is sent by the network management service provider entity to the first network management service consumer entity or the second network management service consumer entity.

When the data management apparatus is a chip used in the first/second network management service consumer entity, the chip implements a function of the first/second network management service consumer entity in the foregoing method embodiments. The chip receives information from another module (for example, a radio frequency module or an antenna) in the first/second network management service consumer entity, where the information is sent by the network management service provider entity to the first/second network management service consumer entity; or the chip sends information to another module (for example, a radio frequency module or an antenna) in the first/second network management service consumer entity, where the information is sent by the first/second network management service consumer entity to the network management service provider entity.

In addition, it should be noted that, the transceiver unit and/or processing unit may be implemented through a virtual module. For example, the processing unit may be implemented through a software functional unit or a virtual apparatus, and the transceiver unit may be implemented through a software function or a virtual apparatus. Alternatively, the processing unit or the transceiver unit may be implemented through a physical apparatus. For example, if the apparatus is implemented through a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

Division into the modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is caused to perform the methods in the foregoing embodiments.

An embodiment of this application further provides a data management system, including the data management apparatus.

An embodiment of this application further provides a circuit. The circuit is coupled to a memory. The circuit is configured to perform the methods in the foregoing embodiments. The circuit may include a chip circuit.

It should be noted that one or more of the foregoing units may be implemented by software, hardware, or a combination of software and hardware. When any one of the foregoing units is implemented by software, the software exists in a form of computer program instructions, and is stored in the memory. The processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any regular processor, or the like. The steps of the methods disclosed with reference to this application may be directly implemented by a hardware processor, or may be implemented by a combination of hardware and a software module in a processor.

The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can be configured to carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

The terms "comprising (comprising)", "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. "A" or "one" does not exclude a meaning of plurality. It should be noted that in this application, words such as "example" or "for example" are used to represent giving an example, an illustration, or a description. Any method or design solution described as an "example" or "for example" in this application should not be construed as being more preferred or having more advantages than another method or design solution. Exactly, use of the words such as "example" or "for example" is intended to present a related concept in a specific manner. A single processor or another unit may implement several functions enumerated in the claims. Some measures are recorded in dependent claims that are different from each other, but this does not mean that these measures cannot be combined to produce a better effect.

The following describes implementations of this application by using specific embodiments. A person skilled in the art may understand other advantages and effects of this application based on content disclosed in this specification. Although descriptions of this application are provided with reference to preferred embodiments, this does not mean that features of this application are limited to this implementation. On the contrary, a purpose of describing this application with reference to an implementation is to cover another option or modification that may be derived based on claims of this application. To improve an in-depth understanding of this application, the following descriptions include a plurality of details. This application may be alternatively implemented without using these details. In addition, to avoid confusion or blurring a focus of this application, some details are omitted from the descriptions. It should be noted that embodiments in this application and the features in embodiments may be mutually combined in the case of no conflict.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof indicates any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. The term "and/or" describes an association relationship for describing associated objects and represents that three relationships may exist. For example, A and/or B may represent the following three cases: Only A exists, both A and B exist, and only B exists. In the descriptions of this application, unless otherwise specified, "a plurality of" means two or more than two. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the words such as "example" or "for example" is intended to present a related concept in a specific manner for ease of understanding.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or the functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

The foregoing embodiments are merely intended for describing the technical solutions of this application, rather than limiting this application. Although this application is described in detail with reference to the foregoing embodiments, a person of ordinary skill in the art should understand that modifications may still be made to the technical solutions described in the foregoing embodiments or equivalent replacements may be made to some technical features, and such modifications or replacements do not cause the essence of the corresponding technical solutions to depart from the scope of the technical solutions in embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A data management method, wherein the method comprises:
receiving, by a network management service provider entity, first information from a first network management service consumer entity, wherein the first information indicates that a first data set from the first network management service consumer entity is allowed to be shared;
receiving, by the network management service provider entity, a first request from a second network management service consumer entity, wherein the first request is used to request a second twin service; and
sending, by the network management service provider entity to the second network management service consumer entity, a response to the first request based on the first request and at least part of data in the first data set, wherein the response comprises an execution result of the second twin service.

2. The method according to claim 1, wherein the first request comprises at least one of the following information: a twin object, a twin service type, or a service configuration.

3. The method according to claim 1 or 2, wherein the method further comprises:
receiving, by the network management service provider entity, a second request from the first network management service consumer entity, wherein the second request is used to request a first twin service;
creating, by the network management service provider entity, a first twin instance based on the second request, wherein the first twin instance comprises the first data set; and
executing, by the network management service provider entity, the first twin service based on the first twin instance; and
the sending, by the network management service provider entity to the second network management service consumer entity, the response to the first request based on the first request and the at least part of data in the first data set comprises:
determining, by the network management service provider entity based on the first request and the first information, to use the at least part of data in the first data set to execute the second twin service; and
executing, by the network management service provider entity, the second twin service based on the at least part of data in the first data set.

4. The method according to claim 1 or 2, wherein the method further comprises:
storing, by the network management service provider entity, the first data set into a database based on the first information; and
the sending, by the network management service provider entity to the second network management service consumer entity, the response to the first request based on the first request and the at least part of data in the first data set comprises:
searching, by the network management service provider entity, the database for the at least part of data in the first data set based on the first request; and
executing, by the network management service provider entity, the second twin service based on the at least part of data in the first data set.

5. The method according to claim 3, wherein the first information is carried in the second request.

6. The method according to any one of claims 1 to 4, wherein after the receiving, by the network management service provider entity, the first request from the second network management service consumer entity, the method further comprises:
sending, by the network management service provider entity, a third request to the first network management service consumer entity based on the first request, wherein the third request is used to request to allow sharing of the at least part of data in the first data set, and the first information is carried in a response to the third request.

7. The method according to claim 6, wherein the sending, by the network management service provider entity, the third request to the first network management service consumer entity based on the first request comprises:
determining, by the network management service provider entity based on the first request, to use the at least part of data in the first data set to execute the second twin service; and
sending, by the network management service provider entity, the third request to the first network management service consumer entity.

8. The method according to claim 5 or 6, wherein the method further comprises:
receiving, by the network management service provider entity from the first network management service consumer entity, a sharing policy of the first data set, wherein the sharing policy comprises at least one of the following information:
a list of network management service consumer entities that are allowed to share and use the first data set;
a list of network management service consumer entities that are not allowed to share and use the first data set;
a usage permission for the first data set, wherein the usage permission comprises at least one of the following: read-only, write-only, read-write, or use-only;
an identifier of data allowed to be shared in the first data set; or
a type of data allowed to be shared in the first data set.

9. A data management method, wherein the method comprises:
sending, by a first network management service consumer entity, first information to a network management service provider entity, wherein the first information indicates that a first data set from the first network management service consumer entity is allowed to be shared.

10. The method according to claim 9, wherein the method further comprises:
sending, by the first network management service consumer entity, a second request to the network management service provider entity, wherein the second request is used to request a first twin service; and
the first data set is comprised in a first twin instance created by the network management service provider entity based on the second request.

11. The method according to claim 10, wherein the first information is carried in the second request.

12. The method according to claim 9, wherein the method further comprises:
receiving, by the first network management service consumer entity, a third request from the network management service provider entity, wherein the third request is used to request to allow sharing of at least part of data in the first data set, and the first information is carried in a response to the third request.

13. The method according to any one of claims 9 to 12, wherein the method further comprises:
sending, by the first network management service consumer entity, a sharing policy of the first data set to the network management service provider entity, wherein the sharing policy comprises at least one of the following information:
a list of network management service consumer entities that are allowed to share and use the first data set;
a list of network management service consumer entities that are not allowed to share and use the first data set;
a usage permission for the first data set, wherein the usage permission comprises at least one of the following: read-only, write-only, read-write, or use-only;
an identifier of data allowed to be shared in the first data set; or
a type of data allowed to be shared in the first data set.

14. A data management method, wherein the method comprises:
sending, by a second network management service consumer entity, a first request to a network management service provider entity, wherein the first request is used to request a second twin service; and
receiving, by the second network management service consumer entity from the network management service provider entity, a response to the first request, wherein the response comprises an execution result of the second twin service, the response is obtained based on the first request and at least part of data in a first data set, the first data set is from a first network management service consumer entity, and the first network management service consumer entity indicates that sharing of the first data set is allowed.

15. The method according to claim 14, wherein the first request comprises at least one of the following information: a twin object, a twin service type, or a service configuration.

16. A data management apparatus, wherein the apparatus comprises a unit configured to implement the method according to any one of claims 1 to 8, a unit configured to implement the method according to any one of claims 9 to 13, or a unit configured to implement the method according to claim 14 or 15.

17. A data management apparatus, comprising a processor, a memory, and instructions stored in the memory and run on the processor, wherein when the instructions are run, the data management apparatus is caused to perform the method according to any one of claims 1 to 8, the method according to any one of claims 9 to 13, or the method according to claim 14 or 15.

18. A data management system, comprising a network management service provider entity, a first network management service consumer entity, and a second network management service consumer entity, wherein the network management service provider entity is configured to perform the method according to any one of claims 1 to 8, the first network management service consumer entity is configured to perform the method according to any one of claims 9 to 13, and the second network management service consumer entity is configured to perform the method according to claim 14 or 15.

19. A computer-readable storage medium, wherein the computer-readable storage medium comprises instructions, and when the instructions are run by a processor, the method according to any one of claims 1 to 15 is implemented.

20. A computer program product comprising instructions, wherein when the instructions are run on a data management apparatus, the data management apparatus is caused to perform the method according to any one of claims 1 to 15.
